(19) Europäisches Patentamt
European Patent Office
Office européen des brevets

(11) **EP 1 620 523 B1**

(12) **EUROPEAN PATENT SPECIFICATION**

(45) Date of publication and mention
of the grant of the patent:
**15.12.2010 Bulletin 2010/50**

(51) Int Cl.:
***C09K 5/06*** *(2006.01)*      ***C04B 24/26*** *(2006.01)*

(21) Application number: **05733679.4**

(22) Date of filing: **07.04.2005**

(86) International application number:
**PCT/NL2005/000266**

(87) International publication number:
**WO 2005/097935 (20.10.2005 Gazette 2005/42)**

(54) **Heat storage polymer composition containing a heat accumulating phase change material and product which includes such a composition**

POLYMERZUSAMMENSETZUNG MIT WÄRMESPEICHERNDEM PHASENWECHSELMATERIAL SOWIE DARAUF BASIERENDES PRODUKT

MATERIAU A CHANGEMENT DE PHASE ACCUMULANT LA CHALEUR ET UN PRODUIT QUI COMPREND CETTE COMPOSITION

(84) Designated Contracting States:
**AT BE BG CH CY CZ DE DK EE ES FI FR GB GR HU IE IS IT LI LT LU MC NL PL PT RO SE SI SK TR**

(30) Priority: **08.04.2004 NL 1025910**

(43) Date of publication of application:
**01.02.2006 Bulletin 2006/05**

(60) Divisional application:
**10012761.2**

(73) Proprietor: **Capzo International B.V.**
**7631 AK Ootmarsum (NL)**

(72) Inventors:
• **REEZIGT, Herman**
  **NL-7631 EH Ootmarsum (NL)**
• **ROUWERS, Bartholomeus, Wilhelmus, Maria**
  **NL-7631 KA Ootmarsum (NL)**
• **GLASTRA, Hendrik**
  **NL-7535 PG Enschede (NL)**

(74) Representative: **Griebling, Onno**
**Octrooibureau Griebling BV,**
**Sportweg 10**
**5037 AC Tilburg (NL)**

(56) References cited:
**EP-A- 0 693 542      DE-A1- 10 218 977**
**US-A- 4 209 413      US-A- 4 585 843**
**US-A- 5 709 945      US-B1- 6 200 681**

**Description**

The invention relates to a heat storage polymer composition according to the preamble of claim 1, and to a product according to claims 12-16.

Such a polymer composition is known from US-4209413. This known composition is in the form of a gel in which the particles phase change material are dispersed. This has the drawback that for all practical purposes the composition must be contained in a fully closed container and cannot be used as a mechanically stable, independent, material. Furthermore, the temperature range of the composition is only limited and the methods for preparing it are complex.

The composition according to the invention may be used as additive for a great many of materials. The use thereof in building materials such as concrete, brick and heat resistant construction sheets and construction parts, and polymeric materials such as synthetic tubes offers in particular completely novel advantages for heating and heat storage.

As the composition is both chemically and mechanically stable to high temperatures (70 °C - 180 °C), it is very suitable to be used as additive.

The additive according to the invention exhibits a constant heat emission. Furthermore the additive maintains the typical characteristics of a polymer such as plastic deformation at high temperatures. In addition the composition may also have features such as restricted water-absorptive power, fire-resistant, and very great thermal capacity as well as storage heat capacity.

Because the heat accumulating material is permanently bonded to the first polymerized monomer and the second polymerized monomer or prepolymer keeps its properties during mechanical treatments and high temperature such as 70-180°C. the composition maintains its polymeric characteristics, structure and heat accumulating effect and as a result of this it is extremely useful as additive.

Examples of a first monomer which may be used are: vinylcompounds, polyols or polyalcohols, sulfides and epoxy compounds having a functional group which may be bonded to a heat accumulating phase change material. In particular (meth)acrylic acid and dimethylolpropionic acid as well as salts thereof are useful therefore.

The choice of the second or a third monomer or prepolymer is determined by the desired physical properties which a polymer composition according to the invention should have. An example of a second monomer is an epoxy-acrylate which forms together with the first monomer a thermal stable matrix to which also a phase change material is bonded, either directly or indirectly. A second example is isocyanate which in the presence of polyol may be converted by polymerization into polyurethane which provides a flexible matrix to which at the first monomer a phase change material is bonded. By this the phase change material may be entrapped in closed cells which are bonded to a solid polymeric matrix by a phase in which the phase change material has been assimilated into a gel. A use of the composition is thereby: the application as additive for polyurethane foam which possesses a high storage of heat capacity. These foams may be applied for several purposes such as heat mattresses.

Known phase change materials can be used. It may be a hydrate of an organic or inorganic salt, and especially sodium acetate trihydrate.

Further preferred forms of the compositions according to the invention are described in the claims 2-11.

One aspect thereof is a liquid or a paste featured in the claims 9-11.

The composition which is specified therein is a liquid or a paste in which the above mentioned compositions according to the invention are embedded as solid particles. This liquid or paste is particularly suitable to employ directly as additive for polymers, for instance PVC plastisols. This liquid or paste has as great advantage that the process of grinding has become unnecessary and the particle size of the polymer composition is significantly smaller than the size of the particles from the process of grinding. The particles could have a size even less than 20 $\mu$m. Through this the application of the polymer composition in thin layers is possible.

Contrary to the invention by all common production processes a polymer composition is obtained, in which the heat accumulating materials are not or weakly bonded to the regarding polymer, which composition can lose its polymeric properties by decomposition or deforming at which the phase change materials would be released during exposing to high temperatures (70-180°C) or by mechanical treatments.

The monomers, prepolymers and phase change materials which may be used for the method of preparation are known compounds. Some examples of these compounds are described in the afore-mentioned preferred embodiments according to the invention. The polymerization is performed by common methods such as radical polymerization and stepwise polymerization. The acrylate monomers may be polymerized by radical polymerization with the help of thermally decomposing radical initiator such as Vazo® 52 (2,2'-azobis(2,4-dimethylvaleronitrile). The stepwise polymerization is for instance an addition reaction between a polyol and an isocyanate, if desired accelerated by a catalyst, such as Dabco® 33-LV. Advantage of the two said methods is that they can be applied under usual conditions and at different temperatures.

The advantage of a polymer composition in the form of an additive and certainly in the form of a liquid or paste, is that this is very simply to use in existing processes. For instance, the polymer composition, which has been in situ polymerized in a plasticizer for instance diisononylftalate or in a polyol for instance Terathane 1000, can be immediately added to the existing coating formulas. In this way the suitability of the polymer composition will not be hindered by complex and economically not achievable techniques, such as vacuum techniques and capsulating of phase change materials.

The phase change materials are in molten state mixed with the blend of acrylate monomers. In this way less water will be used to obtain a homogeneous solution. Hydrates of salt produced by applying a solution of phase change material have a higher content of water of crystals as compared to when molten phase change materials are used. Because these hydrates have a lower melting point than the equivalent hydrates with a lower content of water of crystallization, they are not desired.

So if desired and for obtaining a polymer composition comprising a heat accumulating phase change material, firstly a mixture of the first monomer in the presence of a heat accumulating phase change material will be polymerized according to conventional method, for example into a gel, and subsequently the obtained product is added to at least one of the second monomer or prepolymer after which the obtained product is polymerized by known method. By this method a heat accumulating phase change material may be, for example, firstly bonded to a polymer, after which the polymer with the phase change material is entrapped in a matrix of a second polymer. By these methods of preparation it is important that the phase change materials which are presented in the blend, would be crystallized out. This can be brought about for instance by leaving the acquired blend to cool down or by adding a seed crystal.

For the use of the polymer composition as final product it is favorable that the composition according to the invention is a solid, coherent compound.

Further the claimed exclusive rights comprise a product wherein the polymer composition according to the invention as well as a process for the production of this is used. When the composition is obtained in a solid state, it may be ground and the obtained granulates, grains or powder may be used as additive. When on the other hand the composition is a tender solid state, it is easy to add this to a compound.

In addition to the use with building materials and polymeric materials the products according to the invention could be used in: hot-water containers, plates for keeping food warm, teddy bears, insulators or heaters for engines, industrial installations, thermo packs for medical purposes, shoe soles, gloves, means for thawing, radiators, in particular underfloor heating and insulating materials. So the number of applications of the invention is almost unlimited.

*It is observed that US-S-4 585 843 describes the use of a phase change material as heat sink for taking up the excess reaction heat generated during a process of preparing a polymer gel. To this end a given amount of this material is simply added to the gel in the reaction vessel. The endproduct of the reaction is not a composition having heat accumulating properties.*

US-B1-6 200.681 *relates to the preparation of a heat accumulating composition (in fact a paraffine wax) in which the phase change material is present in the shape of microcapsules each comprising a core of this material and a shell of a polymer. The preparationmethod described therein cannot be used with salt hydrates.*

US-A-5 709 945 *also describes the use of phase change material as the core of a microcapsule surrounded by shells of respectively a hydrophobe wax and various polymers.A similar product : a core of phase change material surrounded by a shell is disclosed in* DE-A1-10 218 977*.*

EP-A-0 693 542 *describes measures for preventing supercooling of a phase change material and has no bearing on the present invention* WO 03 068 414 *describes a siliconrubber in which particles phase change matrial are dispersed* US 5 63 7 389 *describes a composition having a matrix of an organic polymer having an open cellstucture containing phase change materials.* WO 03 085 346 *describes a wallcoating material from gypsum or a polymer containing particles of phase change material. For all of these publication goes that the inventive idea, underlying the present invention, is not known and cannot be derived herefrom.*

The present invention will be elucidated by means of the following non-limiting examples.

### Example 1

Below there is described an example of a process for the production of a polymer composition where the polymeric matrix is an acrylate to which sodium acetate trihydrate is bonded. The acrylate matrix comprises an epoxy-acrylate as second monomer. This acrylate matrix has the advantage that it is stable at 180°C and exhibits very little swelling by polar compounds such as water and specific polyols. The product may be ground into fine powder and can as additive right away be applied in polymers and plastics.

### *Preparation 1*

    1. Mix the monomers, being acrylic acid and an epoxy-acrylate (may also be a different monomer)

1.1 8 grams of acrylic acid with 8 grams of epoxy-acrylate

2. Add glycerol and wetting agent

2.1 0.2 grams of wetting agent and 1 gram of glycerol

3. Neutralize with sodium hydroxide to obtain sodium acrylate

3.1 9 grams of sodium hydroxide (50%)

4. Heat blend of monomers (= product steps 1, 2 and 3) to 70°C

5. Heat sodium acetate trihydrate crystals to 70°C, clear liquid.

6. Mix blend of monomers with molten crystal

6.1 add 73 grams of molten salt hydrate

7. Mix to a homogeneous blend

8. Add initiator and stirr

8.1 add 0.8 grams of initiator, for instance Vazo 52

9. Pour the blend within one minute into a container. After one minute the polymerization will start and a polymer composition will be formed.

Physical properties measured according to measuring method mentioned below.

| Physical form | solid |
|---|---|
| Density product | 1150 kg/m$^3$ |
| Density powder | 800 kg/m$^3$ |
| Color | white |
| Heat storage capacity | 2500 J/kg.K |
| Bulk heat storage capacity* | 150 kJ/kg |
| *=average value over a temperature range from 40°C to 60°C | |

## Example 2

Below there is described an example of a process for the production of a polymer composition in situ in a plasticizer where the polymeric matrix is an acrylate to which sodium acetate trihydrate is bonded. The acrylate matrix comprises an epoxyacrylate as second monomer. This acrylate matrix has the advantage that it is stable at 180°C and exhibits very little swelling by polar compounds such as water and specific polyols. The final product is a paste with the advantage that grinding is not necessary any more.

### *Preparation 2*

1. Mix the monomers being acrylic acid and an epoxy-acrylate (may also be a different monomer)

1.1 8 grams of acrylic acid with 8 grams of epoxy-acrylate

2. Add glycerol and wetting agent

2.1 0.2 grams of wetting agent and 1 gram of glycerol

3. Neutralize with sodium hydroxide to obtain sodium acrylate

3.1 9 grams of sodium hydroxide (50%)

4. Heat blend of monomers (= product steps 1, 2 and 3) to 70°C

5. Heat sodium acetate trihydrate crystals to 70°C, clear liquid.

6. Mix blend of monomers with molten crystal.

6.1 add 73 grams of molten salt hydrate

7. Mix to a homogeneous blend

8. Heat plasticizer to 72°C and add 2 % emulsifier

9. Add the homogeneous blend stepwise to the heated plasticizer while stirring

10. Add initiator and stirr

10.1 add 0.8 grams of initiator, for instance Vazo 52

11. Stir the reaction mixture until all of the monomers are polymerized and let the product cool afterwards.

**The physical properties of a polymer composition have been measured by the following method.**

The sample to be measured had been placed in the illustrated sensor, in which in an isolated space the heat absorption of the sample as well as the heat emission of the sensor was measured. The sensor, made of aluminium, has a heat capacity of 910 J/kg.K, a weight of 2,553 kg and the initial temperature was 80°C.
The following formulae will be used here:

$$Q_{absorbed} = Q_{emitted}$$

$$Q_{sensor} = Q_{sample}$$

$$m \times c \times \Delta T = ( m \times \Delta T )$$

$$c\ sample = (( m\ sensor \times c\ sensor \times \Delta T\ sensor )) \times \frac{1}{( m\ sample \times \Delta T\ sample )}$$

See the drawing below for the aluminium sensor:

materiaal Aluminium 1 stuks

Chart concerning heat capacity and absorption of energy in the form of heat in 0.1 kg polyurethane matrix containing acetate trihydrate in a gel of acrylate polymers in solid state and according to the invention.

—□— : heat absorption Q with average heat capacity of 4445 J/kg.K (J)

—×— : heat capacity c [J/K] in relation to temperature

- - - - - : heat capacity c [J/K] in relation to temperature

Chart of heat emission of 0.1 kg solid polyurethane over a period of time which contains sodium acetate trihydrate in a gel of polyacrylate according to the invention.

Compare this with the properties of water, a liquid heaving a heat capacity of 4180 which had, in a comparable test, transferred all its energy in 180 seconds. It is just this property of heat emission in a very slow way, which makes the polymer composition so special which contains a polyurethane matrix having a bonded sodium acetate trihydrate. In plain words the polymer composition remains warm long, so this warmth can be used for a long period because it will not be emitted fast.

## Claims

1. Heat storage polymer composition comprising a heat accumulating phase change material, **characterized in that** the composition comprises a first monomer to which the phase change material is bonded, and at least one second monomer or prepolymer which determines the physical properties of the composition, the phase change material having a phase change temperature and the composition being solid both below and above the phase change temperature;

wherein the phase change material is a salt hydrate;

and wherein the second monomer is an aliphatic epoxy acrylate.

2. Polymer composition according to claim 1 **characterized in that** the composition comprises from 1 to 90 mol % of the first monomer the balance being the second monomer or prepolymer.

3. Polymer composition according to claim 1 or 2 **characterized in that** the first monomer contains a functional group to which the phase change material is bonded.

4. Polymer composition according to any of the previous claims **characterized in that** the composition comprises a matrix to which the phase change material is bonded.

5. Polymer composition according to any of the claims 1 to 4 **characterized in that** the first monomer is a vinyl compound or a hydroxyl compound which contains a carboxyl group as well as salts thereof.

6. Polymer composition according to claim 1 **characterized in that** the salt is sodium acetate trihydrate.

7. Polymer composition according to any of the claims 1 to 6 **characterized in that** the composition contains a number of mutually different phase change materials.

8. Polymer composition according to any of the claims 1 to 7 **characterized in that** the composition is on the basis of a polyacrylate to which sodium acetate trihydrate is bonded, said polyacrylate being incorporated in a matrix of polyurethane.

9. Polymer composition comprising a heat accumulating phase change material **characterized in that** the composition is a liquid or a paste which is suitable as an additive which contains a composition according to any of the claim 1 to **8** as solid particles.

10. Polymer composition according to claim 9 **characterized in that** the particles are coated with a protective layer.

11. Polymer composition according to claim 9 or 10 **characterized in that** the liquid comprises polyol or diisononylphtalate.

12. Heat accumulating product comprising as an additive a polymer composition according to any of the claims 1 to 11.

13. Product according to claim 12 wherein the additive has been applied as a granulate or powder.

14. Product according to claim 12 wherein the additive has been applied as a liquid or paste.

**Patentansprüche**

1. Polymerzusammensetzung mit wärmespeicherndem Phasenwechselmaterial, **dadurch gekennzeichnet, dass** die Zusammensetzung ein erstes Monomer, an welches das Phasenwechselmaterial gebunden ist, und mindestens ein zweites Monomer oder Präpolymer enthält, welches die physikalischen Eigenschaften der Zusammensetzung bestimmt, wobei das Phasenwechselmaterial eine Phasenwechseltemperatur aufweist und die Zusammensetzung sowohl unterhalb als auch oberhalb der Phasenwechseltemperatur fest ist;

wobei es sich bei dem Phasenwechselmaterial um ein Salzhydrat handelt

und wobei es sich bei dem zweiten Monomer um ein aliphatisches Epoxyacrylat handelt.

2. Polymerzusammensetzung nach Anspruch 1, **dadurch gekennzeichnet, dass** das erste Monomer 1 bis 90 Mol-% der Zusammensetzung und das zweite Monomer oder das Präpolymer den Rest ausmacht.

3. Polymerzusammensetzung nach Anspruch 1 oder 2, **dadurch gekennzeichnet, dass** das erste Monomer eine funktionelle Gruppe enthält, an welche das Phasenwechselmaterial gebunden ist.

**4.** Polymerzusammensetzung nach einem der vorhergehenden Ansprüche, **dadurch gekennzeichnet, dass** die Zusammensetzung eine Matrix enthält, an welche das Phasenwechselmaterial gebunden ist.

**5.** Polymerzusammensetzung nach einem der Ansprüche 1 bis 4, **dadurch gekennzeichnet, dass** es sich bei dem ersten Monomer um eine Vinylverbindung oder eine Hydroxylverbindung, welche eine Carboxylgruppe enthält, oder um Salze derselben handelt.

**6.** Polymerzusammensetzung nach Anspruch 1, **dadurch gekennzeichnet, dass** es sich bei dem Salz um Natriumacetattrihydrat handelt.

**7.** Polymerzusammensetzung nach einem der Ansprüche 1 bis 6, **dadurch gekennzeichnet, dass** die Zusammensetzung eine Anzahl von unterschiedlichen Phasenwechselmaterialien enthält.

**8.** Polymerzusammensetzung nach einem der Ansprüche 1 bis 7, **dadurch gekennzeichnet, dass** die Zusammensetzung auf einem Polyacrylat basiert, an welches Natriumacetattrihydrat gebunden ist, wobei das Polyacrylat in eine Polyurethanmatrix eingebunden ist.

**9.** Polymerzusammensetzung mit wärmespeicherndem Phasenwechselmaterial, **dadurch gekennzeichnet, dass** es sich bei der Zusammensetzung um eine Flüssigkeit oder eine Paste handelt, welche als ein Additiv geeignet ist, welches eine Zusammensetzung nach einem der Ansprüche 1 bis 8 als Feststoffteilchen enthält.

**10.** Polymerzusammensetzung nach Anspruch 9, **dadurch gekennzeichnet, dass** die Teilchen mit einer Schutzschicht überzogen sind.

**11.** Polymerzusammensetzung nach Anspruch 9 oder 10, **dadurch gekennzeichnet, dass** die Flüssigkeit ein Polyol oder Diisononylphthalat aufweist.

**12.** Wärmespeeieherndes Produkt, welches als Additiv eine Polymerzusammensetzung nach einem der Ansprüche 1 bis 11 aufweist.

**13.** Produkt nach Anspruch 12, wobei das Additiv als Granulat oder Pulver angewendet wird.

**14.** Produkt nach Anspruch 12, wobei das Additiv als Flüssigkeit oder Paste angewendet wird.

**Revendications**

**1.** Composition de polymère et à stockage thermique, comprenant un matériau à changement de phase qui accumule de la chaleur, **caractérisée en ce que** la composition comprend un premier monomère auquel est lié le matériau à changement de phase et au moins un deuxième monomère ou prépolymère qui détermine les propriétés physiques de la composition, le matériau à changement de phase présentant une certaine température de changement de phase, et la composition étant solide aussi bien au-dessous qu'au-dessus de cette température de changement de phase ;
dans laquelle le matériau à changement de phase est un sel hydraté ;
et dans laquelle le deuxième monomère est un époxy-acrylate aliphatique.

**2.** Composition de polymère conforme à la revendication 1, **caractérisée en ce que** la composition comprend du premier monomère en une proportion de 1 à 90 % en moles, le complément étant du deuxième monomère ou prépolymère.

**3.** Composition de polymère conforme à la revendication 1 ou 2, **caractérisée en ce que** le premier monomère comporte un groupe fonctionnel auquel le matériau à changement de phase est lié.

**4.** Composition de polymère conforme à l'une des revendications précédentes, **caractérisée en ce que** la composition comprend une matrice à laquelle le matériau à changement de phase est lié.

**5.** Composition de polymère conforme à l'une des revendications 1 à 4, **caractérisée en ce que** le premier monomère est un composé, vinylique ou un composé hydroxylé qui porte un groupe carboxyle, ou un sel d'un tel composé.

**6.** Composition de polymère conforme à la revendication 1, **caractérisée en ce que** le sel est de l'acétate de sodium trihydraté.

**7.** Composition de polymère conforme à l'une des revendications 1 à 6, **caractérisée en ce que** la composition comprend un certain nombre de matériaux à changement de phase, différents les uns des autres.

**8.** Composition de polymère conforme à l'une des revendications 1 à 7, **caractérisée en ce que** la composition est à base d'un polyacrylate auquel est lié de l'acétate de sodium trihydraté, lequel polyacrylate est incorporé dans une matrice de polyuréthane.

**9.** Composition de polymère, comprenant un matériau à changement de phase qui accumule de la chaleur, **caractérisée en ce que** la composition est un liquide ou une pâte qui est approprié(e) en tant qu'adjuvant contenant une composition conforme à l'une des revendications 1 à 8 sous forme de particules solides.

**10.** Composition de polymère conforme à la revendication 9, **caractérisée en ce que** les particules sont revêtues d'une couche protectrice.

**11.** Composition de polymère conforme à la revendication 9 ou 10, **caractérisée en ce que** le liquide comprend un polyol ou du phtalate de diisononyle.

**12.** Produit accumulant de la chaleur, comprenant en tant qu'adjuvant une composition de polymère conforme à l'une des revendications 1 à 11.

**13.** Produit conforme à la revendication 12, dans lequel l'adjuvant a été incorporé sous forme de granulés ou de poudre.

**14.** Produit conforme à la revendication 12, dans lequel l'adjuvant a été incorporé sous forme de liquide ou de pâte.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4209413 A
- US S4585843 A
- US 6200681 B1
- US 5709945 A
- DE 10218977 A1

- EP 0693542 A
- WO 03068414 A
- US 5637389 A
- WO 03085346 A